# EUROPÄISCHE PATENTSCHRIFT

(11) **EP 2 732 452 B1**
(45) Veröffentlichungstag und Bekanntmachung des Hinweises auf die Patenterteilung: **19.09.2018**
(21) Anmeldenummer: 12740087.7
(22) Anmeldetag: 04.07.2012
(51) Int. Cl.: H01G 4/30, H01C 1/148, H01C 7/00, H01G 2/06, H01G 4/232, H01C 1/01, H01C 7/02, H01C 7/04, H01C 7/10

(54) **ELEKTRISCHE VORRICHTUNG**
ELECTRICAL DEVICE
DISPOSITIF ELECTRIQUE

(30) Priorität: 13.07.2011 DE 102011107193
(43) Veröffentlichungstag der Anmeldung: 21.05.2014
(73) Patentinhaber: Epcos AG, 81671 München (DE)
(72) Erfinder: ORTNER, Markus, A-8521 Wettmannstätten (AT); SCHOSSMANN, Michael, A-8530 Deutschlandsberg (AT); KOINI, Markus, A-8054 Seiersberg (AT); ENGEL, Günter, A-8430 Leibnitz (AT); HOFFMANN, Christian, 83075 Bad Feilnbach (DE)
(74) Vertreter: Epping - Hermann - Fischer
(86) Internationale Anmeldenummer: PCT/EP2012/063037
(87) Internationale Veröffentlichungsnummer: WO 2013/007575

(56) Entgegenhaltungen:
- EP-A1- 0 018 067
- EP-A2- 1 011 117
- US-A- 4 734 819

## Beschreibung

Es wird eine elektrische Vorrichtung angegeben.

Es sind elektrische Vorrichtungen bekannt, die zum Beispiel als Kondensatoren, wie zum Beispiel Elektrolytkondensatoren, Folienkondensatoren oder Keramikkondensatoren, als Thermistoren, beispielsweise Kaltleiter oder Heißleiter, oder als Varistoren ausgeführt sind. Eine elektrische und mechanische Kontaktierung derartiger elektrischer Vorrichtungen auf einer elektronischen Leiterplatte (PCB, Printed Circuit Board) findet bei so genannten oberflächenmontierten Bauelementen (SMD, Surface Mounted Device) standardmäßig mittels Löten statt. Mit zunehmender Größe der elektrischen Vorrichtungen treten durch den Lötprozess jedoch Schwierigkeiten auf. Beispielsweise kann es zu einem so genannten Lötschock kommen, der infolge des Lötprozesses zu thermisch induzierten mechanischen Spannungen führt. Diese Spannungen können in weiterer Folge zum Ausfall einer derartigen Vorrichtung führen.

Aus der EP 1 011 117 A2 sind Kondensatoren bekannt, die zur Verringerung von mechanischen Kräften beim Montieren Anschlusselemente an einer Metallplatte aufweisen.

Es ist eine zu lösende Aufgabe, eine elektrische Vorrichtung mit verbesserter mechanischer Stabilität anzugeben.

Diese Aufgabe wird durch die vorliegende Erfindung, welche durch die Merkmale des unabhängigen Patentanspruchs definiert ist, gelöst. Vorteilhafte Ausführungsformen und Weiterbildungen der Erfindung gehen aus den abhängigen Ansprüchen hervor.

Die elektrische Vorrichtung weist zumindest ein Funktionselement auf.

Das Funktionselement weist einen Keramikkörper auf. Der Keramikkörper kann ein dielektrisches Verhalten aufweisen. Das Funktionselement kann dabei beispielsweise als Kondensatorelement ausgebildet sein. Weiterhin kann der Keramikkörper auch halbleitende Eigenschaften aufweisen. Der Keramikkörper kann weiterhin beispielsweise als Thermistorelement, etwa als Heißleiterelement oder als Kaltleiterelement, oder als Varistorelement ausgeführt sein.

Gemäß einer bevorzugten Ausführungsform ist das zumindest eine Funktionselement als Kondensatorelement ausgebildet, wobei der Keramikkörper des Kondensatorelements einen Schichtstapel mit übereinander angeordneten Keramikschichten und dazwischen angeordneten ersten und zweiten Elektrodenschichten aufweisen kann. Die Keramikschichten können zum Beispiel Blei-Zirkonat-Titanat aufweisen. Die Elektrodenschichten können beispielsweise Silber, Palladium und/oder Platin aufweisen. Die Elektrodenschichten erstrecken sich vorzugsweise von zwei gegenüberliegenden Seitenflächen des Keramikkörpers in den Schichtstapel hinein. Zusätzlich können auch weitere Elektrodenschichten im Inneren des Keramikkörpers angeordnet sein, die sich bis zu keiner der Seitenflächen des Keramikkörpers erstrecken.

Der Keramikkörper weist zwei gegenüberliegende Seitenflächen auf, wobei auf der einen Seitenfläche der beiden gegenüberliegenden Seitenflächen eine erste und auf der anderen Seitenfläche eine zweite elektrische Kontaktschicht aufgebracht sind. Die erste und zweite elektrische Kontaktschicht können eine oder mehrere Einzelschichten, beispielsweise eine oder mehrere Metallschichten, die zum Beispiel Chrom, Kupfer und/oder Gold aufweisen können, umfassen. Ist das zumindest eine Funktionselement als Kondensatorelement mit ersten und zweiten Elektrodenschichten im Keramikkörper ausgebildet, so können die ersten Elektrodenschichten die erste elektrische Kontaktschicht und die zweiten Elektrodenschichten die zweite elektrische Kontaktschicht kontaktieren.

Das Funktionselement ist zwischen einer ersten und einer zweiten Kontaktleiste angeordnet. Die erste und zweite Kontaktleiste umfassen jeweils zumindest einen Kontaktstift. Die erste und zweite Kontaktleiste umfassen dabei jeweils eine Mehrzahl von Kontaktstiften. Durch die Verwendung mehrerer Kontaktstifte pro Kontaktleiste kann zum einen die Zuleitungsinduktivität, die von einer Leiterplatte bis zu einer Kontaktschicht des Funktionselements auftritt, verbessert werden und zum anderen können die Stromtragfähigkeit vergrößert und der Strom gleichmäßig von der Kontaktschicht zu in zumindest einigen Ausführungsformen vorhandenen Innenelektroden innerhalb des Keramikkörpers verteilt werden.

Die Kontaktstifte sind als elektrisch leitfähige Stifte ausgebildet. Vorzugsweise weisen die Kontaktstifte ein Metall auf oder sind daraus. Jeder der Kontaktstifte kann beispielsweise einen länglichen, stift- oder stabförmigen Körper aufweisen. Der Querschnitt senkrecht zur Längsachse des stiftförmigen Körpers kann rund, beispielsweise kreisförmig, oder eckig, beispielsweise quadratisch, sein. Die erste Kontaktschicht des Funktionselements steht mit zumindest einem Kontaktstift der ersten Kontaktleiste in elektrischem Kontakt. Weiterhin steht die zweite Kontaktschicht des Funktionselements mit zumindest einem Kontaktstift der zweiten Kontaktleiste in elektrischem Kontakt. Die Kontaktstifte der Kontaktleisten können sich insbesondere dazu eignen, das Funktionselement zu kontaktieren. Insbesondere kann das Funktionselement zwischen den Kontaktleisten derart angeordnet sein, dass die erste elektrische Kontaktschicht des Funktionselements der ersten Kontaktleiste und die zweite elektrische Kontaktschicht des Funktionselements der zweiten Kontaktleiste zugewandt sind. Die Kontaktstifte der Kontaktleisten können die jeweils zugewandte elektrische Kontaktschicht des Funktionselements direkt berühren. Weiterhin können auch zumindest eine oder mehrere Zwischenschichten zwischen den Kontaktstiften und der jeweils zugewandten elektrischen Kontaktschicht des Funktionselements vorhanden sein.

Bei einem Verfahren zur Herstellung einer elektrischen Vorrichtung wird ein Funktionselement mit einem Keramikkörper, bei dem auf zwei gegenüberliegenden Seitenflächen eine erste und eine zweite elektrische Kontaktschicht aufgebracht sind, bereitgestellt und in einem weiteren Verfahrensschritt zwischen einer ersten und einer zweiten Kontaktleiste angeordnet, sodass jede der Kontaktleisten mit jeweils einer Kontaktschicht des Funktionselements in elektrischem Kontakt steht.

Die hier und im Folgenden beschriebenen Merkmale und Ausführungsformen gelten gleichermaßen für die elektrische Vorrichtung und das Verfahren zur Herstellung dieser.

Erfindungsgemäß weist die elektrische Vorrichtung eine Kappe auf, die über dem Funktionselement und den Kontaktleisten angeordnet ist. Die Kappe kann beispielsweise einen quaderförmigen Umriss aufweisen, wobei eine Seitenfläche des Quaders ausgespart ist. Diese ausgesparte Seitenfläche kann hier und im Folgenden auch als Öffnung der Kappe bezeichnet werden. Vorzugsweise weist die Kappe ein elektrisch isolierendes Material, beispielsweise ein Kunststoffmaterial, auf.

Gemäß einer weiteren Ausführungsform befindet sich die über dem Funktionselement und den Kontaktleisten angeordnete Kappe in direktem Kontakt mit den beiden Kontaktleisten. Gemäß einer weiteren Ausführungsform befindet sich die Kappe in direktem mechanischen Kontakt mit den beiden Kontaktleisten. Somit kann eine elektrische Kontaktierung des Funktionselementes über die Kontaktleisten in Kombination mit der Kappe erfolgen.

Durch einen hier beschriebenen Aufbau kann mit Vorteil erreicht werden, dass die elektrische Vorrichtung nicht durch thermisch induzierte mechanische Spannungen, die beispielsweise infolge eines Lötschockes auftreten, beschädigt wird.

Erfindungsgemäß ist das Funktionselement durch die Kappe zwischen der ersten und der zweiten Kontaktleiste geklemmt. Durch diese Klemmung mittels der Kappe kann vorteilhafterweise eine mechanische Kontaktierung von Kontaktleisten und Funktionselement erreicht werden. Die Kappe kann hier und im Folgenden daher auch als Klemmkappe bezeichnet werden.

Erfindungsgemäß weist jede der Kontaktleisten eine Trägerleiste auf, in der die Kontaktstifte befestigt sind. Die Trägerleisten können beispielsweise einen länglichen, quaderförmigen Körper umfassen. Erfindungsgemäß weisen die Trägerleisten Kunststoff auf. Die Kontaktstifte ragen vorzugsweise durch die jeweilige Trägerleiste hindurch und sind vorzugsweise in die Trägerleiste derart eingesetzt, dass sie auf zwei gegenüberliegenden Seiten der Trägerleiste überstehen und auf diesen beiden Seiten von der Trägerleiste abragen. Weiterhin sind die Kontaktstifte bevorzugt gleichmäßig beabstandet in der jeweiligen Trägerleiste angeordnet. Dadurch können die die Trägerleisten und Kontaktstifte aufweisenden Kontaktleisten eine zaunförmige Gestalt erhalten.

Gemäß einer weiteren Ausführungsform überdeckt die Kappe das Funktionselement und die Trägerleisten der Kontaktleisten. Dabei können die Kontaktstifte zumindest teilweise aus dem von der Kappe überdeckten Raum, insbesondere aus der Öffnung der Kappe, herausragen.

Gemäß einer weiteren Ausführungsform weist die Kappe an zwei gegenüberliegenden Innenseiten angeschrägte Bereiche auf. Diese angeschrägten Bereiche verlaufen vorzugsweise entlang der zwei gegenüberliegenden Innenseiten und können beispielsweise dadurch zustande kommen, dass die Kappe an diesen Innenseiten in an die Öffnung angrenzenden Bereichen eine dünnere Wandung aufweist als in der Öffnung abgewandten Bereichen. Vorzugsweise sind die Trägerleisten in den angeschrägten Bereichen angeordnet. Mittels der angeschrägten Bereiche der Kappe kann eine besonders effiziente Klemmung des Funktionselements und der Kontaktleisten erfolgen.

Insbesondere kann mittels der Kappe eine Klemmung der Stifte auf die Kontaktschichten erzielt werden. Die Stifte können mechanisch vorgespannt werden und wie eine Feder wirken. Dadurch können beispielsweise auftretende axiale Längenänderungen aufgenommen werden. Diese axialen Längenänderungen entstehen zum Beispiel durch eine Änderung der Temperatur in der Vorrichtung. Weiterhin kann mit Vorteil erreicht werden, dass eine vertikale Belastung auf die Kontaktleisten nicht zu einer Scherspannung oder Biegebelastung auf die Vorrichtung führt.

Gemäß einer weiteren Ausführungsform weist die Vorrichtung eine Mehrzahl an Funktionselementen auf, die zwischen der ersten und zweiten Kontaktleiste angeordnet sind. Dabei können die verschiedenen Funktionselemente gleich ausgeführt sein. Es ist aber auch möglich, dass sich die einzelnen Funktionselemente hinsichtlich ihres Aufbaus und/oder ihrer Funktion voneinander unterschieden.

Gemäß einer weiteren Ausführungsform sind zumindest zwei der Funktionselemente nebeneinander entlang der ersten und der zweiten Kontaktleiste angeordnet. Bei einem derartigen Aufbau werden die nebeneinander entlang der Kontaktleisten angeordneten Funktionselemente beide mittels Kontaktstiften der ersten und der zweiten Kontaktleiste kontaktiert.

Gemäß einer weiteren Ausführungsform sind zumindest zwei der Funktionselemente übereinander entlang der Kontaktstifte angeordnet. Vorzugsweise sind dabei die Kontaktstifte derart ausgeführt, dass sie alle übereinander angeordneten Funktionselemente kontaktieren können. Beispielsweise können die Kontaktstifte eine Länge aufweisen, die es ihnen erlaubt, zwei übereinander gelegene Funktionselemente zu kontaktieren. Gemäß einer weiteren Ausführungsform kontaktiert zumindest ein Funktionselement genau einen Kontaktstift der ersten Kontaktleiste und einen Kontaktstift der zweiten Kontaktleiste. Es ist auch möglich, dass alle Funktionselemente der elektrischen Vorrichtung von jeweils genau einem Kontaktstift der ersten Kontaktleiste und jeweils genau einem Kontaktstift der zweiten Kontaktleiste kontaktiert werden.

Gemäß einer weiteren Ausführungsform sind zumindest ein weiteres Funktionselement und eine dritte Kontaktleiste vorhanden. Vorzugsweise ist das weitere Funktionselement zwischen der zweiten und der dritten Kontaktleiste angeordnet. Die Kontaktstifte der zweiten Kontaktleiste können sowohl mit dem zwischen der ersten und der zweiten Kontaktleiste als auch mit dem zwischen der zweiten und dritten Kontaktleiste angeordneten Funktionselement in direktem elektrischem Kontakt stehen.

Gemäß einer weiteren Ausführungsform sind alle Funktionselemente der elektrischen Vorrichtung als Kondensatorelemente, beispielsweise wie weiter oben beschrieben, ausgeführt. Je nach Anforderung an die elektrische Vorrichtung, kann die Anzahl der Funktionselemente, die sie aufweist, angepasst werden. So weist die Vorrichtung beispielsweise eine Mehrzahl an Kondensatorelementen auf, wenn eine große Kapazität erreicht werden soll.

Gemäß einer weiteren Ausführungsform ist zumindest ein Funktionselement als Varistorelement ausgeführt. Beispielsweise kann die elektrische Vorrichtung mehrere als Kondensatorelemente ausgeführte Funktionselemente und einen niederinduktiv integriertes Varistorelement aufweisen.

Gemäß einer weiteren Ausführungsform können das zumindest eine Funktionselement und die Kontaktstifte der Kontaktleisten oder im Falle von mehreren Funktionselementen alle in einer Ebene angeordneten Funktionselemente und die Kontaktstifte der Kontaktleisten gemeinsam mit einer Folie oder einem Folienband umwickelt sein. Dadurch können das zumindest eine oder die Mehrzahl der sich in einer Ebene befindlichen Funktionselemente und die Kontaktelemente auf einfache Weise zusammengehalten werden. Durch die Folie oder das Folienband kann eine Klemmwirkung wie oben in Verbindung mit der Kappe beschrieben erreicht werden.

Die hier beschriebenen Ausführungsformen einer elektrischen Vorrichtung zeichnen sich insbesondere durch einen kostengünstigen Aufbau, hochzuverlässige Betriebseigenschaften und durch eine sehr hohe Strombelastbarkeit auf. Weiterhin kann die hier beschriebene Vorrichtung zumindest in einigen Ausführungsformen eine sehr niederinduktive Anbindung erlauben.

Weitere Vorteile und vorteilhafte Ausführungsformen der hier beschriebenen Vorrichtung ergeben sich aus den im Folgenden in Verbindung mit den Figuren 1a bis 7b beschriebenen Ausführungsformen.

Es zeigen:
Figuren 1a und 1b ein Verfahren zur Herstellung einer elektrischen Vorrichtung gemäß einem Ausführungsbeispiel,
Figuren 2a bis 2c verschiedene Ansichten einer Kontaktleiste gemäß einem weiteren Ausführungsbeispiel,
Figuren 3a bis 3c ein Verfahren zur Herstellung einer elektrischen Vorrichtung gemäß einem weiteren Ausführungsbeispiel,
Figur 4a bis 4c verschiedene Ansichten einer Kappe gemäß einem weiteren Ausführungsbeispiel, und
Figuren 5a bis 7b elektrische Vorrichtungen gemäß weiteren Ausführungsbeispielen.

In den Ausführungsbeispielen und Figuren können gleiche oder gleichwirkende Bestandteile jeweils mit den gleichen Bezugszeichen versehen sein. Die dargestellten Elementen und deren Größenverhältnisse untereinander sind grundsätzlich nicht als maßstabsgerecht anzusehen, vielmehr können einzelne Elemente wie zum Beispiel Schichten, Bauteile und Bereiche zur besseren Darstellbarkeit oder zum besseren Verständnis übertrieben dick oder groß dimensioniert dargestellt sein.

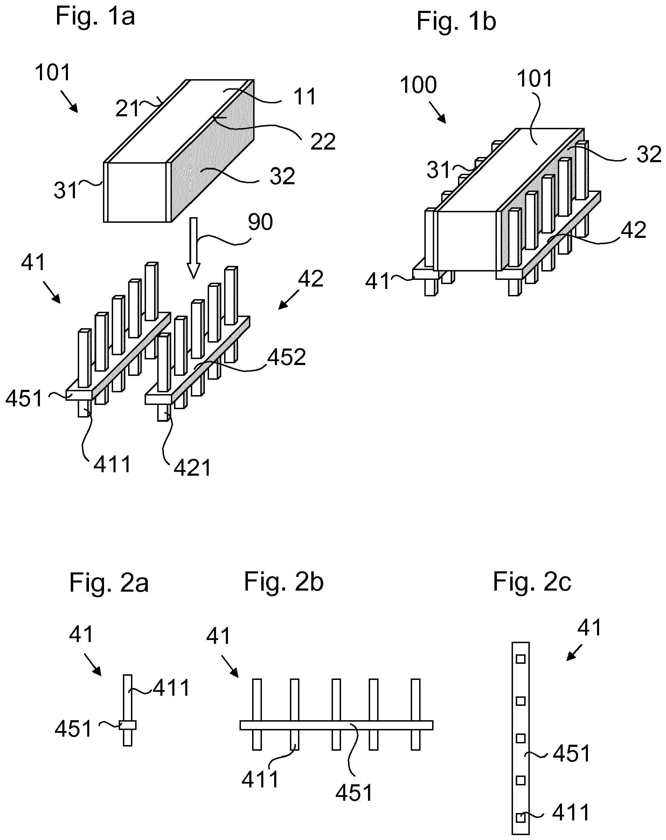

In den Figuren 1a und 1b ist ein Ausführungsbeispiel für ein Verfahren zur Herstellung einer elektrischen Vorrichtung gezeigt.

In einem ersten Verfahrensschritt wird hierzu, wie in Figur 1a gezeigt ist, ist ein Funktionselement bereitgestellt, das in einem weiteren Verfahrensschritt, der durch einen Pfeil 90 gekennzeichnet ist, zwischen einer ersten und einer zweiten Kontaktleiste 41, 42 angeordnet wird.

Das Funktionselement 101 weist einen quaderförmigen Keramikkörper 11 auf, der im gezeigten Ausführungsbeispiel als Kondensatorelement ausgeführt ist und eine Keramik aus Blei-Zirkonat-Titanat umfasst. Alternativ kann das Funktionselement 101 auch ein anderes Keramikmaterial aufweisen oder beispielsweise auch als Varistor- oder Thermistorelement ausgeführt sein und einen Keramikkörper aus einem entsprechenden anderen hierfür geeigneten Keramikmaterial umfassen.

Das Keramikmaterial des Keramikkörpers 11 weist Keramikschichten auf, zwischen denen erste und zweite Elektrodenschichten angeordnet sind (nicht gezeigt).

Der Keramikkörper 11 weist weiterhin eine Seitenfläche 21 auf, auf der eine erste elektrische Kontaktschicht 31 aufgebracht ist. Weiterhin weist der Keramikkörper 11 eine der Seitenfläche 21 gegenüberliegende Seitenfläche 22 auf, auf der eine zweite elektrische Kontaktschicht 32 aufgebracht ist. Die erste und zweite Kontaktschicht 31, 32 sind elektrisch mit den ersten bzw. zweiten Elektrodenschichten im Inneren des Keramikkörpers 11 verbunden und dienen zur elektrischen Kontaktierung dieser.

Die erste und die zweite Kontaktleiste 41, 42 weisen jeweils eine Trägerleiste 451, 452 auf. Weiterhin weisen die erste und die zweite Kontaktleiste 41, 42 jeweils eine Mehrzahl an Kontaktstiften 411, 421 auf, welche in den Trägerleisten 451, 452 befestigt sind, indem die Kontaktstifte 411, 421 die jeweilige Trägerleiste 451, 452 durchragen. Die Kontaktleisten 41, 42 sind im gezeigten Ausführungsbeispiel gleich ausgeführt. Alternativ können sich die Kontaktleisten 41, 42 auch voneinander unterscheiden, beispielsweise hinsichtlich ihrer Länge und/oder hinsichtlich der Anzahl ihrer Kontaktstifte 411, 412.

In den Figuren 2a bis 2c ist beispielhaft die Kontaktleiste 41 in einer Frontansicht, in einer Seitenansicht und in einer Aufsicht dargestellt. Die Kontaktstifte 411 sind als elektrisch leitfähige, stabförmige Stifte ausgeführt, die jeweils von zwei Seiten der Trägerleiste 451 abragen. Im gezeigten Ausführungsbeispiel sind die zueinander benachbarte Kontaktstifte 411 der Kontaktleiste 41 gleich voneinander beabstandet. Alternativ können die zueinander benachbarten Kontaktstifte 411, 412 auch verschiedene Abstände zueinander aufweisen.

Nach dem Einsetzen des Funktionselement 101 zwischen die Kontaktleisten 41, 42 ist in der derart hergestellten elektrische Vorrichtung 100, wie in Figur 1b gezeigt ist, die erste Kontaktschicht 31 der ersten Kontaktleiste 41 und die zweite Kontaktschicht 32 der zweiten Kontaktschicht 42 zugewandt und die beiden Kontaktschichten 31, 32 stehen mit der jeweiligen Kontaktleiste 41, 42 in elektrischem Kontakt. Es kann sich hierbei wie im gezeigten Ausführungsbeispiel um einen direkten Presskontakt zwischen den Kontaktschichten 31, 32 und den jeweiligen Kontaktstäben 411, 421 handeln. Alternativ dazu ist es auch möglich, dass eine oder mehrere weitere elektrisch leitfähige Zwischenschichten zwischen dem Funktionselement 101 und den Kontaktleisten 41, 42 vorhanden sind. Weiterhin kann um das Funktionselement 101 und die Kontaktstifte 411, 421 der Kontaktleisten 41, 42 eine Folie oder ein Folienband gewickelt werden (nicht gezeigt), um die Kontaktleisten 41, 42 und das Funktionselement aneinander zu fixieren.

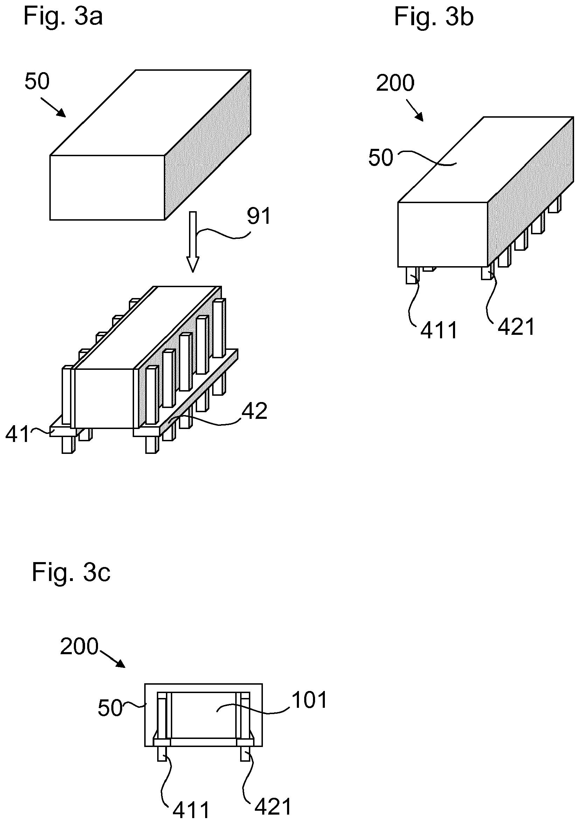

In den Figuren 3a bis 3c ist ein weiteres Ausführungsbeispiel für ein Verfahren zur Herstellung einer weiteren elektrischen Vorrichtung 200 gezeigt.

In einem Verfahrensschritt hierzu wird wie in Verbindung mit den Figuren 1a und 1b beschrieben ein Funktionselement 101 zwischen zwei Kontaktleiten 41, 42 angeordnet.

Wie in Figur 3a gezeigt ist, wird weiterhin eine Kappe 50 bereitgestellt, die in einem weiteren Verfahrensschritt, der mit dem Pfeil 91 gekennzeichnet ist, über dem Funktionselement 101 und den Kontaktleisten 41, 42 angeordnet wird. Dadurch kann mit Vorteil erreicht werden, dass das Funktionselement 101 durch die Kappe 50 zwischen der ersten und der zweiten Kontaktleiste 41, 42 geklemmt ist. Durch diese Klemmung kann gleichzeitig eine gute mechanische und elektrische Kontaktierung zwischen den Kontaktleisten 41, 42 und dem Funktionselement 101 erfolgen.

In Figur 3b ist die so hergestellte elektrische Vorrichtung 200 mit aufgesetzter Kappe 50 dargestellt. Dabei ist zu erkennen, dass die Kontaktstifte 411, 421 aus der geöffneten Seite der Kappe 50 zumindest teilweise herausragen. Bei einer derartigen Anordnung üben auftretende axiale Kräfte, die auf die Vorrichtung 100 und/oder auf das Funktionselement 101 wirken, nur Druck auf den Keramikkörper 11 aus. Tangentiale, vertikale und Zugkräfte treten vorteilhafterweise nicht auf. Biegekräfte wirken von den Kontaktstiften 411, 421 nur wie axiale Kräfte.

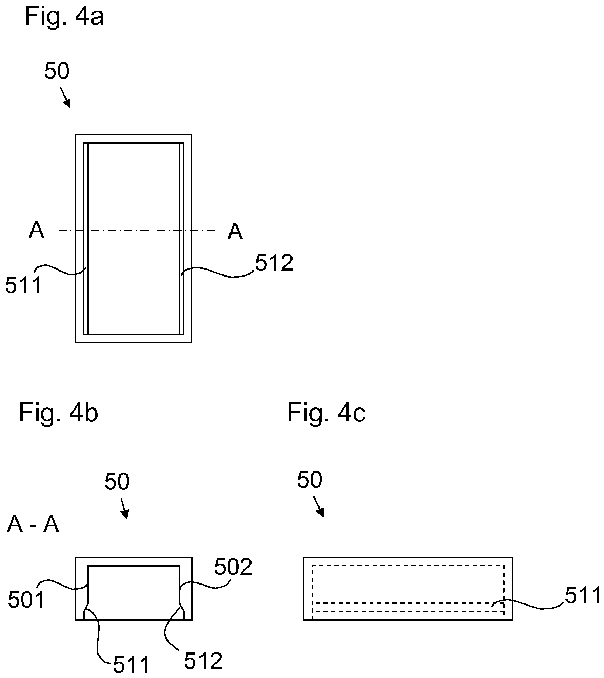

In den Figuren 4a bis 4c ist die Kappe 50 in verschiedenen Ansichten gezeigt, und zwar in einer Ansicht von unten, das heißt von der Öffnung der Kappe 50 aus, in einer Schnittansicht in der in Figur 4a gezeigten Schnittebene A-A, und in einer Seitenansicht. Die Kappe 50 weist an zwei gegenüberliegenden Innenseiten 501, 502 angeschrägte Bereiche 511, 512 auf, die an die Öffnung der Kappe angrenzen und dadurch zustande kommen, dass die Kappe in diesen Bereichen eine dünnere Wandung als in an die angeschrägten Bereiche angrenzenden Bereichen aufweist.

Figur 3c zeigt die elektrische Vorrichtung 200 aus Figur 3b in einer Schnittansicht, in der erkennbar ist, dass die Trägerleisten 451, 452 der Kontaktleisten 41, 42 in den angeschrägten Bereichen 511, 512 der Innenseiten 501, 502 der Kappe 50 angeordnet sind. Mittels der angeschrägten Bereiche 511, 512 wird eine Klemmung der Kontaktstifte 411, 421 auf die Kontaktschichten 31, 32 erreicht. Die Kontaktstifte 411, 421 werden insbesondere mechanisch vorgespannt. Dadurch können axiale Längenänderungen aufgenommen werden, zum Beispiel durch Temperaturänderungen entstehen können. Eine vertikale Belastung auf die Kontaktleiste führt nicht zu einer Scherspannung oder Biegebelastung auf das Funktionselement 101 und/oder auf die Vorrichtung 200.

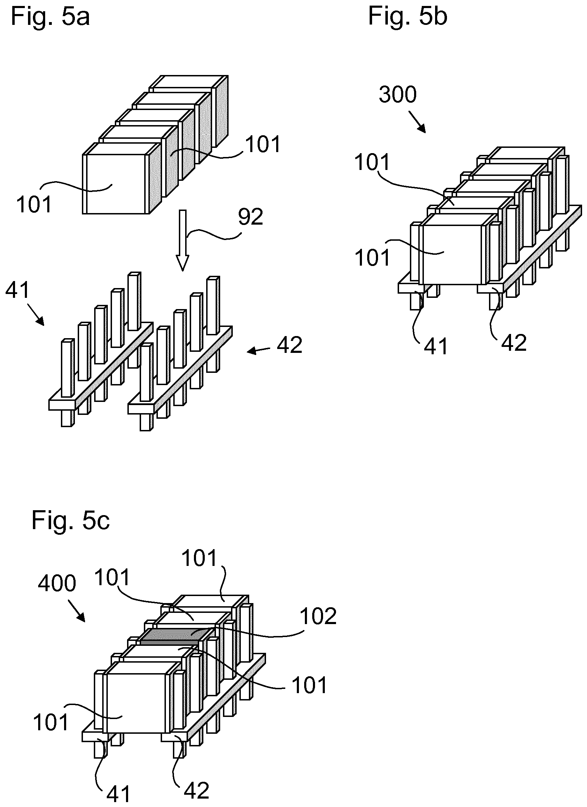

In den Figuren 5a und 5b ist ein Ausführungsbeispiel für ein Verfahren zur Herstellung einer elektrischen Vorrichtung 300 gezeigt, bei dem die Vorrichtung 200 im Vergleich zum in den Figuren 1a und 1b gezeigten Verfahren eine Mehrzahl an Funktionselementen 101 aufweist, welche nebeneinander entlang der ersten und der zweiten Kontaktleiste 41, 42 angeordnet sind.

Dazu werden in einem Verfahrensschritt, der durch den Pfeil 92 gekennzeichnet ist, einzelne Funktionselemente 101, die nebeneinander aufgereiht sind, zwischen zwei bereitgestellte Kontaktleisten 41, 42 angeordnet. Im gezeigten Ausführungsbeispiel wird jedes der Funktionselemente 101 jeweils von einem Kontaktstift 411 der ersten Kontaktleiste 41 und von einem Kontaktstift 421 der zweiten Kontaktleiste 42 kontaktiert. Alternativ ist es auch möglich, dass eines oder mehrere der Funktionselemente 101 von mehreren Kontaktstiften 411, 421 der ersten und/oder zweiten Kontaktleiste 41, 42 kontaktiert werden.

In Figur 5c ist ein Ausführungsbeispiel für eine elektrische Vorrichtung 400 gezeigt, wobei im Unterschied zur elektrischen Vorrichtung 300 in Figur 5b zumindest ein Funktionselement 102 vorhanden ist, das als Varistorelement ausgeführt ist. Alle weiteren Funktionselemente 101 sind wie in den vorherigen Ausführungsbeispielen als Kondensatorelemente ausgeführt. Alternativ ist es auch denkbar, dass zwei oder mehr der Funktionselemente der elektrischen Vorrichtung 400 als Varistorelemente ausgeführt sind.

Die in den Figuren 5b und 5c gezeigten elektrischen Vorrichtungen 300 und 400 können weiterhin auch eine Folienumwicklung wie in Verbindung mit Figur 1b erläutert und/oder eine Kappe wie in Verbindung mit den Figuren 3a bis 4c gezeigt ist, aufweisen.

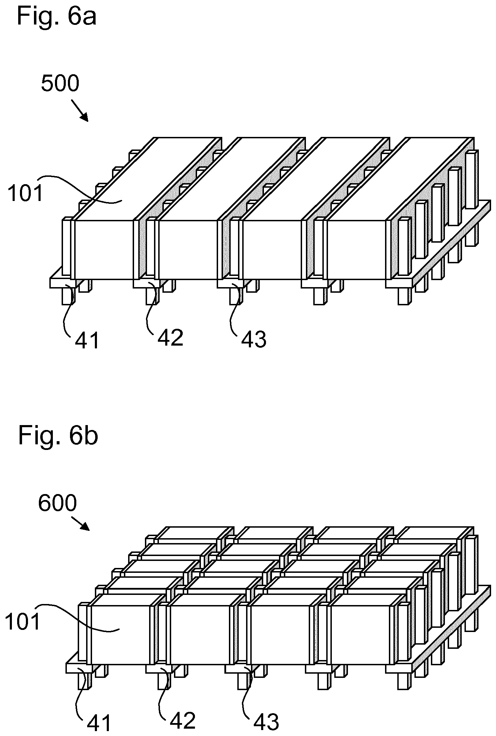

In den Figuren 6a bis 7b sind weitere Ausführungsbeispiele für elektrische Vorrichtungen gezeigt, die jeweils eine Mehrzahl von Funktionselementen in nebeneinander angeordneten Reihen und/oder übereinander aufweisen. Die Herstellungsverfahren gemäß den vorherigen Ausführungsbeispielen können entsprechend erweitert auch zur Herstellung der im Folgenden beschriebenen Ausführungsbeispiele verwendet werden. Weiterhin können die elektrischen Vorrichtungen gemäß der Figuren 6a bis 7b auch eine Folienumwicklung wie in Verbindung mit Figur 1b erläutert und/oder eine Kappe wie in Verbindung mit den Figuren 3a bis 4c gezeigt ist, aufweisen, die die Mehrzahl der Funktionselemente und die Kontaktleisten aneinander fixieren und beispielsweise eine Klemmkontaktierung ermöglichen.

Figur 6a zeigt eine elektrische Vorrichtung 500, die weitere Kontaktleisten 43 aufweist, wobei zwischen den Kontaktleisten 41, 42, 43 reihenartig jeweils Funktionselemente 101 angeordnet sind.

Figur 6b zeigt eine elektrische Vorrichtung 600, welche eine Mehrzahl an Kontaktleisten 41, 42, 43 sowie eine Mehrzahl an Funktionselementen 101 aufweist, wobei die Mehrzahl der Funktionselemente 101 sowohl entlang der Kontaktleisten 41, 42, 43 als auch reihenartig zwischen jeweils zwei der Kontaktleisten 41, 42, 43 angeordnet sind. Insbesondere wird im gezeigten Ausführungsbeispiel jedes Funktionselement 101 von genau zwei Kontaktstiften 411, 421 zweier verschiedener Kontaktleisten 41, 42, 43 kontaktiert.

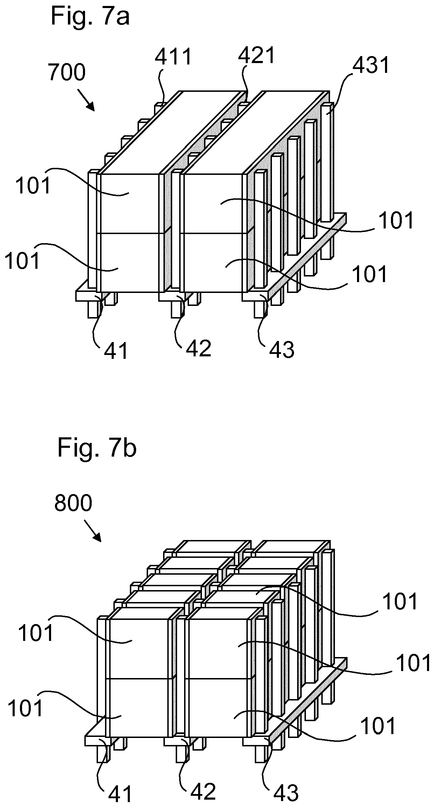

In Figur 7a ist ein weiteres Ausführungsbeispiel einer elektrischen Vorrichtung 700 gezeigt. Die Vorrichtung 700 weist eine Mehrzahl von Funktionselementen 101 auf, wobei jeweils zwei Funktionselemente 101 übereinander entlang der Kontaktstifte 411, 421, 431 der Kontaktleisten 41, 42, 43 angeordnet sind. Die Kontaktstifte 411, 421, 431 sind im Vergleich zu den vorangegangenen Ausführungsbeispielen länger ausgeführt, so dass alle übereinander angeordneten Funktionselemente 101 kontaktiert werden können. Alternativ zum gezeigten Ausführungsbeispiel können auch mehr als zwei Funktionselemente 101 übereinander angeordnet sein.

Figur 7b zeigt eine elektrische Vorrichtung 800 gemäß einem weiteren Ausführungsbeispiel, bei dem eine Mehrzahl von Funktionselementen 101 im Vergleich zum vorherigen Ausführungsbeispiel auch noch entlang der Kontaktleisten 41, 42, 43 angeordnet sind.

Die gezeigten Ausführungsbeispiele weisen im Vergleich zu bekannten elektrischen Vorrichtungen insbesondere einen kostengünstigen Aufbau sowie eine hohe Strombelastbarkeit auf. Weiterhin können die elektrischen Vorrichtungen, insbesondere bei abwechselnder Beschaltung der Kontaktleisten und/oder Kontaktstifte, eine extrem niederinduktive elektrische Anbindung ermöglichen.

### Bezugszeichenliste

- 101, 102: Funktionselement
- 11: Keramikkörper
- 21, 22: Seitenflächen
- 31: erste elektrische Kontaktschicht
- 32: zweite elektrische Kontaktschicht
- 41: erste Kontaktleiste
- 42: zweite Kontaktleiste
- 43: dritte Kontaktleiste
- 411, 421, 431: Kontaktstift
- 451, 452: Trägerleiste
- 50: Kappe
- 501, 502: Innenseite
- 511, 512: angeschrägte Bereiche
- 90, 91, 92: Pfeil
- 100, 200, 300, 400: elektrische Vorrichtung
- 500, 600, 700, 800: elektrische Vorrichtung

## Patentansprüche

1. Elektrische Vorrichtung (100) mit zumindest einem Funktionselement (101), das einen Keramikkörper (11) aufweist, bei dem auf zwei gegenüberliegenden Seitenflächen (21, 22) eine erste und eine zweite elektrische Kontaktschicht (31, 32) aufgebracht sind, und das zwischen einer ersten und einer zweiten Kontaktleiste (41, 42) angeordnet ist, wobei die erste und die zweite Kontaktleiste (41, 42) jeweils eine Mehrzahl von Kontaktstiften (411, 421) aufweisen, wobei die erste Kontaktschicht (31) mit zumindest einem Kontaktstift (411) der ersten Kontaktleiste (41) und die zweite Kontaktschicht (32) mit zumindest einem Kontaktstift (421) der zweiten Kontaktleiste (42) in elektrischem Kontakt steht,
weiterhin aufweisend eine Kappe (50), die über dem Funktionselement (101) und den Kontaktleisten (41, 42) angeordnet ist,
wobei das Funktionselement (101) durch die Kappe (50) zwischen der ersten und der zweiten Kontaktleiste (41, 42) geklemmt ist,
wobei jede der Kontaktleisten (41, 42) eine Trägerleiste (451, 452) aufweist, in der die Kontaktstifte (411, 421) befestigt sind,
wobei die Trägerleisten (451, 452) Kunststoff aufweisen.

2. Vorrichtung nach Anspruch 1, wobei die Kontaktstifte (411, 421) der Kontaktleisten (41, 42) die jeweilige Trägerleiste (451, 452) in gleichmäßigen Abständen zueinander durchragen.

3. Vorrichtung nach einem der Ansprüche 1 oder 2, wobei die Kappe (50) das Funktionselement (101) und die Trägerleisten (451, 452) der Kontaktleisten (41, 42) überdeckt.

4. Vorrichtung nach einem der Ansprüche 1 bis 3, wobei die Kappe (50) an zwei gegenüberliegenden Innenseiten (501, 502) angeschrägte Bereiche (511, 512) aufweist, in denen die Trägerleisten (451, 452) angeordnet sind.

5. Vorrichtung nach einem der vorhergehenden Ansprüche, aufweisend eine Mehrzahl an Funktionselementen (101), die zwischen der ersten und der zweiten Kontaktleiste (41, 42) angeordnet sind.

6. Vorrichtung nach Anspruch 5, wobei zumindest zwei der Mehrzahl der Funktionselemente (101) nebeneinander entlang der Kontaktleisten (41, 42) angeordnet sind.

7. Vorrichtung nach Anspruch 5 oder 6, wobei zumindest zwei der Mehrzahl der Funktionselemente (101, 102) übereinander entlang der Kontaktstifte (411, 421) angeordnet sind.

8. Vorrichtung nach einem der Ansprüche 5 bis 7, wobei zumindest eines der Mehrzahl der Funktionselemente (101) genau einen Kontaktstift (411) der ersten Kontaktleiste (41) und einen Kontaktstift (421) der zweiten Kontaktleiste (42) kontaktiert.

9. Vorrichtung nach einem der vorhergehenden Ansprüche, wobei zumindest ein weiteres Funktionselement (103) und eine dritte Kontaktleiste (43) vorhanden sind, wobei das zumindest eine weitere Funktionselement (103) zwischen der zweiten und der dritten Kontaktleiste (42, 43) angeordnet ist.

10. Vorrichtung nach einem der vorhergehenden Ansprüche, wobei das zumindest eine Funktionselement (101) als Kondensatorelement ausgeführt ist, bei dem der Keramikkörper (11) einen Schichtstapel mit übereinander angeordneten Keramikschichten und dazwischen angeordneten ersten und zweiten Elektrodenschichten umfasst, wobei sich die Elektrodenschichten von den zwei gegenüberliegenden Seitenflächen (21, 22) des Keramikkörpers (11) in den Schichtstapel hineinerstrecken.

11. Vorrichtung nach einem der Ansprüche 1 bis 9, wobei das Funktionselement (101) ein Varistorelement, ein Kaltleiterelement oder ein Heißleiterelement ist.

## Claims

1. Electrical device (100) having at least one functional element (101) that comprises a ceramic body (11), on which a first electrical contact layer (31) and a second electrical contact layer (32) are applied to two opposite-lying side faces (21, 22) respectively and said functional element is arranged between a first contact strip (41) and a second contact strip (42), wherein the first contact strip (41) and the second contact strip (42) comprise several contact pins (411, 421) respectively, wherein the first contact layer (31) is in electrical contact with at least one contact pin (411) of the first contact strip (41) and the second contact layer (32) is in electrical contact with at least one contact pin (421) of the second contact strip (42),
further comprising a cap (50) that is arranged over the functional element (101) and the contact strips (41, 42),
wherein the functional element (101) is clamped between the first contact strip (41) and the second contact strip (42) by way of the cap (50), wherein each of the contact strips (41, 42) comprises a support strip (451, 452), in which the contact pins (411, 421) are fastened,
wherein the support strips (451, 452) comprise synthetic material.

2. Device according to Claim 1, wherein the contact pins (411, 421) of the contact strips (41, 42) protrude through the respective support strip (451, 452) in uniform spacings with respect to one another.

3. Device according to either one of Claims 1 and 2, wherein the cap (50) covers the functional element (101) and the support strips (451, 452) of the contact strips (41, 42).

4. Device according to any one of Claims 1 to 3, wherein the cap (50) comprises inclined regions (511, 512) on two opposite-lying inner sides (501, 502), in which regions the support strips (451, 452) are arranged.

5. Device according to any one of the preceding claims, comprising several functional elements (101) that are arranged between the first contact strip (41) and the second contact strip (42).

6. Device according to Claim 5, wherein at least two of the several functional elements (101) are arranged next to one another along the contact strips (41, 42).

7. Device according to Claim 5 or 6, wherein at least two of the several functional elements (101, 102) are arranged one on top of the other along the contact pins (411, 421).

8. Device according to any one of Claims 5 to 7, wherein at least one of the several functional elements (101) contacts precisely one contact pin (411) of the first contact strip (41) and one contact pin (421) of the second contact strip (42) .

9. Device according to any one of the preceding claims, wherein at least one additional functional element (103) and a third contact strip (43) are provided, wherein the at least one additional functional element (103) is arranged between the second contact strip (42) and the third contact strip (43) .

10. Device according to any one of the preceding claims, wherein the at least one functional element (101) is embodied as a capacitor element on which the ceramic body (11) comprises a layer stack having ceramic layers that are arranged one on top of the other and first and second electrode layers that are arranged between said ceramic layers, wherein the electrode layers extend from the two opposite-lying side faces (21, 22) of the ceramic body (11) into the layer stack.

11. Device according to any one of Claims 1 to 9, wherein the functional element (101) is a varistor element, a PTC thermistor element or an NTC thermistor element.

## Revendications

1. Dispositif électrique (100) comprenant au moins un élément fonctionnel (101) qui possède un corps en céramique (11), avec lequel une première et une deuxième couche de contact électrique (31, 32) sont appliquées sur deux faces latérales (21, 22) opposées, et lequel est disposé entre une première et une deuxième barrette de contact (41, 42), la première et une deuxième barrette de contact (41, 42) possédant respectivement une pluralité de broches de contact (411, 421), la première couche de contact (31) se trouvant en contact électrique avec au moins une broche de contact (411) de la première barrette de contact (41) et la deuxième couche de contact (32) avec au moins une broche de contact (421) de la deuxième barrette de contact (42),
possédant en outre un capot (50) qui est disposé au-dessus de l'élément fonctionnel (101) et des barrettes de contact (41, 42),
l'élément fonctionnel (101) étant coincé par le capot (50) entre la première et la deuxième barrette de contact (41, 42),
chacune des barrettes de contact (41, 42) possédant une barrette porteuse (451, 452) dans laquelle sont fixées les broches de contact (411, 421),
les barrettes porteuses (451, 452) comprenant de la matière plastique.

2. Dispositif selon la revendication 1, les broches de contact (411, 421) traversant les barrettes de contact (41, 42) de la barrette porteuse (451, 452) respective à des écarts uniformes entre elles.

3. Dispositif selon l'une des revendications 1 ou 2, le capot (50) recouvrant l'élément fonctionnel (101) et les barrettes porteuses (451, 452) des barrettes de contact (41, 42).

4. Dispositif selon l'une des revendications 1 à 3, le capot (50) possédant des zones biseautées (511, 512) au niveau de deux côtés intérieurs (501, 502) opposés, dans lesquelles sont disposées les barrettes porteuses (451, 452).

5. Dispositif selon l'une des revendications précédentes, possédant une pluralité d'éléments fonctionnels (101) qui sont disposés entre la première et la deuxième barrette de contact (41, 42).

6. Dispositif selon la revendication 5, au moins deux de la pluralité d'éléments fonctionnels (101) étant disposés l'un à côté de l'autre le long des barrettes de contact (41, 42).

7. Dispositif selon la revendication 5 ou 6, au moins deux de la pluralité d'éléments fonctionnels (101, 102) étant disposés l'un au-dessus de l'autre le long des broches de contact (411, 421).

8. Dispositif selon l'une des revendications 5 à 7, au moins l'un de la pluralité d'éléments fonctionnels (101) venant en contact avec exactement une broche de contact (411) de la première barrette de contact (41) et une broche de contact (421) de la deuxième barrette de contact (42).

9. Dispositif selon l'une des revendications précédentes, au moins un élément fonctionnel supplémentaire (103) et une troisième barrette de contact (43) étant présents, l'au moins un élément fonctionnel supplémentaire (103) étant disposé entre la deuxième et la troisième barrette de contact (42, 43).

10. Dispositif selon l'une des revendications précédentes, l'au moins un élément fonctionnel (101) étant réalisé sous la forme d'un condensateur, avec lequel le corps en céramique (11) comporte un empilement de couches avec des couches de céramique disposées les unes au-dessus des autres ainsi que premières et des deuxièmes couches d'électrode disposées entre celles-ci, les couches d'électrode s'étendant vers l'intérieur dans l'empilement de couches depuis les deux faces latérales (21, 22) opposées du corps en céramique (11).

11. Dispositif selon l'une des revendications 1 à 9, l'élément fonctionnel (101) étant un élément varistance, un élément à CTP ou un élément à CTN.
